# EUROPÄISCHE PATENTSCHRIFT

(11) **EP 3 293 409 B1**
(45) Veröffentlichungstag und Bekanntmachung des Hinweises auf die Patenterteilung: **16.10.2019**
(21) Anmeldenummer: 17189964.4
(22) Anmeldetag: 07.09.2017
(51) Int. Cl.: F16D 65/12

(54) **RADNABENFLANSCH MIT DARAN BEFESTIGTER BREMSSCHEIBENANORDNUNG**
WHEEL HUB FLANGE TO WHICH A BRAKE DISC ASSEMBLY HAS BEEN ATTACHED
FLASQUE DE MOYEU DE ROUE POURVU D'UN AGENCEMENT FORMANT DISQUE DE FREIN FIXÉ AUDIT FLASQUE

(30) Priorität: 09.09.2016 DE 102016117008
(43) Veröffentlichungstag der Anmeldung: 14.03.2018
(73) Patentinhaber: Gigant-Trenkamp & Gehle GmbH, 49413 Dinklage (DE)
(72) Erfinder: Gehle, Markus, 49401 Damme (DE); Zumdohme, Dirk, 49624 Löningen (DE)
(74) Vertreter: Deters, Frank

(56) Entgegenhaltungen:
- WO-A1-2013/054280
- DE-A1- 10 241 867
- DE-C1- 3 942 651

## Beschreibung

Die vorliegende Erfindung bezieht sich auf einen Radnabenflansch mit einer dazu benachbart angeordneten Bremsscheibenanordnung, wobei der Radnabenflansch zur Verbindung einer Radschüssel eines Fahrzeugrades mit einer Radnabe dient, an dem Radnabenflansch sind im mittleren Bereich ein Nabenflansch zur Verbindung des Radnabenflansches mit der Radnabe und außenrandseitig ein nach außen weisend angeordneter Flanschrand zur Verbindung des Radnabenflansches mit der Radschüssel des Fahrzeugrades ausgebildet, der Radnabenflansch überragt mit seinem Außenumfang den Innenrand des Reibrings und weist Kühlluftöffnungen auf, und beabstandet zum Radnabenflansch ist ein Reibring einer Bremsscheibenanordnung angeordnet, der über einen sich zumindest bereichsweise in Richtung des Radnabenflansches erstreckenden Bremsscheibentopf in seiner Einbaulage gehalten ist, wobei der Bremsscheibentopf als eine Trompetenscheibe ausgebildet ist, die sich vom Reibring aus in Richtung des Radnabenflansches erweitert und der Bremsscheibentopf an seinen radnabenflanschseitigen Enden der Trompetenscheibe auf einen nach innen weisenden, am Radnabenflansch ausgebildeten Flanschrand aufgesetzt und mit diesem verbunden ist.

Ein Radnabenflansch mit einer dazu benachbart angeordneten Bremsscheibenanordnung ist aus der Schrift DE 100 27 942 bekannt. Die dort offenbarte Bremsscheibenanordnung besteht aus einem einstückigen Bremsscheibentopf, an den der Reibring im Stück angeformt ist. Eine entsprechende Bremsscheibenanordnung kann beispielsweise aus Grauguss hergestellt sein: Es können auch Verbundbremsscheiben verwendet werden, die aus mehreren Bauteilen zusammengesetzt sind. Die Seitenwand der Topfscheibe oder Trompetenscheibe der vorbekannten Bremsscheibenanordnung ist in axialer Richtung des Radnabenflansches gerade verlaufend ausgeführt. Der Boden der Topfscheibe knickt zur Seitenwand im rechten Winkel auf die Achse der Radnabe zu verlaufend ab. Der Boden der Topfscheibe ist über die durch den Boden der Topfscheibe hindurch reichende Verschraubung des mittleren Bereichs des Nabenflansches mit der Radnabe zwischen diesen Bauteilen geklemmt in seiner Einbaulage gehalten. Dadurch wird die Wärme, die durch Bremsvorgänge im Reibring entsteht, über die Wandung der Topfscheibe direkt in die Radnabe und das darin befindliche Lager abgeleitet, ohne dass dabei Möglichkeiten zur vorherigen Kühlung der Topfscheibe genutzt werden.

Eine weitere Ausführung eines Radnabenflansches ist aus der Schrift WO 2013/054280 bekannt. In dieser Schrift wird eine Trompetenscheibe zur Verbindung des Reibrings mit der Radnabe verwendet. Die Trompetenscheibe dient dem Zweck, die im Reibring entstehende Wärme aus Bremsvorgängen abzuleiten und von der Radnabe und dem darin befindlichen Lager fern zu halten. Die Trompetenscheibe ist allerdings mit einer Befestigungsplatte mit der Radnabe verschraubt, auf die der Radnabenflansch von außen aufgelegt ist. Dadurch wird die Wärme doch in die Radnabe eingeleitet.

In der Schrift WO 2011/151676 A1 ist ein Radnabenflansch offenbart, der einstückig mit der Bremsscheibe verbunden und direkt mit der Radnabe verschraubt ist. Auch hier wird die im Reibring entstehende Wärme über die direkte Verschraubung mit der Radnabe in diese eingetragen.

In der Schrift WO 2013/054280 A1 ist ein Radnabenflansch mit einer zugehörigen Bremsscheibenanordnung offenbart, bei der ein Ringspalt zwischen der Trompetenscheibe und dem Außenumfang des Achsendkörpers ausgebildet ist, der der Durchströmung mit Kühlluft dient. Die Trompetenscheibe ist umfangsseitig geschlossen, so dass keine Kühlluft aus dem Ringspalt direkt auf die Bremsscheibe strömen kann.

Aus den Schriften DE 202 13 950 U1 und DE 102 41 867 A1 ist ein gattungsgemäßer Radnabenflansch bekannt, bei dem die Trompetenscheibe am Außenrand des Radnabenflansches, und zwar auf dessen Innenseite, an diesem befestigt ist. Die Bremsscheibenanordnung ist mit dem Radnabenflansch über einen separaten Bremsscheibenverbindungstorus verbunden. Der Radnabenflansch überragt mit seinem Außenumfang den Innenrand des Reibrings, so dass die Trompetenscheibe sich zum Radnabenflansch hin öffnen kann. Dadurch wird die Wärme aus der Trompetenscheibe so weit wie möglich von der Radnabe entfernt in den Radnabenflansch eingeleitet. Die Trompetenscheibe ist so geformt, dass sie nicht an der Radnabe anliegt und zwischen dem von ihr umgrenzten Innenraum und der Außenoberfläche der Radnabe mit dem Lager ein Kühlluftkanal verbleibt, durch den Wärme aus der Trompetenscheibe abgeführt werden kann. Im Radnabenflansch befindet sich eine Kühlluftöffnung, durch die Kühlluft in den Kühlluftkanal gelangen kann, so dass die Trompetenscheibe von innen her gekühlt wird. Da die Wandung des Bremsscheibenverbindungstorus beabstandet zum Achsendkörper verläuft, ergibt sich zwischen dem Außenumfang des Achsendkörpers und der Innenwand des Bremsscheibenverbindungstorus ein annähernd parallel zum Außenumfang des Achsendkörpers verlaufender Belüftungsringkanal, durch den Kühlluft vom Radnabenflansch aus zwischen dem Außenumfang des Achsendkörpers und dem Innenrand der Bremsscheibe hindurchströmt. Der Belüftungsringkanal dient dem Zweck, eine Wärmeübertragung von der Bremsscheibe auf den Achsendkörper mit den daran angeordneten Lagern zu vermeiden. Der Bremsscheibenverbindungstorus verfügt nur über eine umfangseitig geschlossene Wandung.

In der Schrift DE 39 42 651 C1 ist ebenfalls ein Kühlluftkanal zwischen dem Achsendkörper und der Innenkante der Bremsscheibe offenbart, wobei der Kühlluftkanal allerdings nur von der der Radschüssel zugewandten Seite der Innenkante der Bremsscheibe her um die Innenkante der Bremsscheibe herum in die Kühlkanäle der innenbelüfteten Bremsscheiben verläuft.

Es ist die Aufgabe der vorliegenden Erfindung, die Zufuhr von Kühlluft zur Bremsscheibe zu verbessern.

Die Aufgabe wird für einen gattungsgemäßen Radnabenflansch gelöst, indem in der Wandung der Trompetenscheibe Kühlluftöffnungen ausgebildet sind, durch die ein Kühlluftstrom aus den Kühlluftöffnungen im Radnabenflansch auch in den Außenumfangsbereich der Trompetenscheibe strömen kann.

Durch die Befestigung der Bremsscheibenanordnung am Radnabenflansch anstelle einer Verschraubung zwischen Radnabenflansch und Radnabe kann die Wandung der Trompetenscheibe zumindest bereichsweise an der Innenseite des Radnabenflansches entlang geführt werden. Kühlluft, die durch die Kühlluftöffnungen im Radnabenflansch hindurchtritt, kann nun zusätzlich durch die Kühlluftöffnungen in der Wandung der Trompetenscheibe bis zur Bremsscheibe und an die Außenumfangsflächen der Trompetenscheibe strömen. Durch die Kühlluftöffnungen in der Wandung der Trompetenscheibe wird diese leichter. Das Material der Wandung der Trompetenscheibe wird durch die hindurchströmende Kühlluft zusätzlich gekühlt, wodurch sich die Wärmeabfuhr aus der Bremsscheibenanordnung insgesamt verbessert und dadurch der Verschleiß verringert wird. Außerdem ergibt ein zusätzlicher Kühlungseffekt für die Trompetenscheibe durch die nun besser am Außenumfang der Trompetenscheibe entlang zirkulierende Kühlluft. Durch die niedrigeren Temperaturspitzen als Folge der besseren Kühlung werden Hitzerisse in der Bremsscheibe vermieden, wodurch sich deren Standzeit verbessert. Durch die effektivere Kühlung der Trompetenscheibe verringert sich der Wärmeeintrag in den Radnabenflansch und die Achsnabe, wodurch sich die Standzeit des an der Achsnabe verbauten Lagers erhöht. Auch wird die Bremsleistung erhöht. Wenn in dieser Beschreibung von "innen" und "außen" die Rede ist, so ist mit "innen" die der Radnabe und Achse zugewandte Seite und mit "außen" die zum seitlichen Fahrzeugrand weisende Seite gemeint.

Nach einer Ausgestaltung der Erfindung sind die im Radnabenflansch und in der Wandung der Trompetenscheibe ausgebildeten Kühlluftöffnungen so benachbart zueinander angeordnet, dass die Kühlluft den Übergangsbereich zwischen den Kühlluftöffnungen möglichst umlenkungsfrei durchströmt. Die Kühlluftöffnungen sind in ihrer Anordnung und Form also strömungstechnisch aufeinander abgestimmt, um die Durchsatzmenge der Kühlluft, die durch sie hindurch strömen kann, möglichst groß zu halten. Für eine möglichst hindernisfreie Durchströmung erlauben die Kühlluftöffnungen also zumindest bereichsweise einen Durchblick von außen auf den weiter innen angeordneten Reibring der Bremsscheibenanordnung.

Nach einer Ausgestaltung der Erfindung ist die Wandung der Trompetenscheibe beabstandet zur Radnabe ausgebildet und begrenzt auf diese Weise auf einer Seite einen von der Innenkante des Reibrings der Bremsscheibenanordnung entlang der Radnabe verlaufenden Luftführungskanal, der im Übergangsbereich der im Radflansch und in der Wandung der Trompetenscheibe ausgebildeten Kühlluftöffnungen zueinander mündet. Durch die Ausbildung des Bremstopfes als Trompetenscheibe ist es also möglich, einen zusätzlichen Luftführungskanal für die Zuführung von Kühlluft zur Bremsscheibenanordnung zu schaffen. Dieser zusätzliche Luftführungskanal ermöglicht es, die Wandung der Trompetenscheibe auf der Radnabenseite zusätzlich zu kühlen, wodurch die Wärmeabfuhr und damit die Bremsleistung der Bremsscheibenanordnung zusätzlich gesteigert und der Verschleiß wegen einer geringeren Hitzerissbildung verringert wird.

Nach einer Ausgestaltung der Erfindung ist der Reibring der Bremsscheibenanordnung von Kühlkanälen zur Innenbelüftung durchsetzt, die an einem Ende an dem entlang der Radnabe verlaufenden Luftführungskanal münden. Durch die Mündung der im Reibring angeordneten Kühlkanäle im Luftführungskanal ist eine besonders effektive Kühlung des Reibrings der Bremsscheibenanordnung durch einen leichten Austausch der erhitzten Kühlluft über den Luftführungskanal möglich. Die erhitzte Kühlluft kann gut abgeführt werden, und frische Kühlluft kann leicht in die Kühlkanäle einströmen.

Nach einer Ausgestaltung der Erfindung reicht die Trompetenscheibe auf der Innenseite des Radnabenflansches bis in den Bereich des außenrandseitigen Flanschrands zur Verbindung des Radnabenflansches mit der Radschüssel des Fahrzeugrades, und Stehbolzen, mit denen die Radschüssel des Fahrzeugrades mit dem Radnabenflansch verschraubt werden können, sind im Verbindungsbereich der Trompetenscheibe mit dem Radnabenflansch durch in diesen Bauteilen ausgebildete miteinander fluchtende Bolzenlöcher hindurch geführt. Durch diese Ausgestaltung können die Stehbolzen nicht nur zur Befestigung der Radschüsseln am Radnabenflansch genutzt werden, sondern sie dienen gleichzeitig der Verbindung der Trompetenscheibe mit dem Radnabenflansch.

Nach einer Ausgestaltung der Erfindung weist die Trompetenscheibe im Anbindungsbereich an den Radnabenflansch eine zahnkranzartige Form auf und die Bolzenlöcher zur Verbindung mit dem Radnabenflansch sind in den vorstehenden Zähnen des Zahnkranzes ausgebildet. Im Zwischenraum zwischen benachbarten Zahnflanken kann dadurch Material eingespart werden, was gleichzeitig auch eine Gewichtsersparnis bedeutet.

Nach einer Ausgestaltung der Erfindung ist auf der Innenseite des Radnabenflansches ein über eine trompetenseitige Anlagefläche hervorstehender Zentriervorsprung ausgebildet, an den die Trompetenscheibe in der Montageposition angelehnt ist. Durch den Zentriervorsprung wird die Trompetenscheibe nicht nur durch die Schraubverbindung auf dem Radnabenflansch gehalten, sondern es ergibt sich eine zusätzliche formschlüssige Abstützung quer zur Anlagefläche, wodurch die Festigkeit der Verbindung erhöht wird.

Nach einer Ausgestaltung der Erfindung sind am Radnabenflansch, der Trompetenscheibe oder der übrigen Bremsscheibenanordnung Leitkanten oder Leitbleche zur Kühlluftführung angeordnet. Durch die Leitkanten oder Leitbleche kann das Volumen der Kühlluft, die durch die Kühlluftöffnungen hindurch strömt, gesteigert und im Hinblick auf die Strömungsrichtung und -verteilung optimiert werden.

Nach einer Ausgestaltung der Erfindung weisen die Seitenwände der im Radnabenflansch und in der Wandung der Trompetenscheibe ausgebildeten Kühlluftöffnungen im Ein- und/oder Ausströmungsbereich gerundet gestaltete Übergänge auf. Die gerundeten Übergänge erleichtern die Luftströmung durch die Kühlluftöffnungen und erhöhen den Durchsatz von Kühlluft. Die Luftströmung reißt nicht an scharfen Kanten ab, sondern kann laminar an den Übergängen entlang strömen, wodurch sich die Durchsatzmenge erhöht.

Es wird ausdrücklich darauf hingewiesen, dass jede der vorstehend beschriebenen Ausgestaltungen der Erfindung für sich, aber auch mit einer beliebigen Kombination einzelner, mehrerer oder aller übrigen Ausgestaltungen mit dem Gegenstand des Anspruchs 1 kombinierbar sind, soweit dem keine technisch zwingenden Hintergründe entgegen stehen.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher beschrieben werden. Es zeigen:
- Fig. 1:: eine Ansicht auf die Außenseite eines Radnabenflansches,
- Fig. 2:: eine Ansicht auf die Innenseite eines Radnabenflansches,
- Fig. 3:: eine Ansicht von schräg außen auf eine Trompetenscheibe mit Reibring,
- Fig. 4:: eine Ansicht von schräg innen auf den Zusammenbau eines Radnabenflansches mit einer Trompetenscheibe mit Reibring,
- Fig. 5:: eine Schnittansicht durch einen Zusammenbau eines Radnabenflansches mit einer Trompetenscheibe mit Reibring,
- Fig. 6:: eine vergrößerte Ansicht der Kühlluftöffnungen in dem Zusammenbau mit einer skizzierten Luftströmung im Stand, und
- Fig. 7:: die in Fig. 6 dargestellte vergrößerte Ansicht der Kühlluftöffnungen in dem Zusammenbau mit einer skizzierten Luftströmung während der Fahrt.

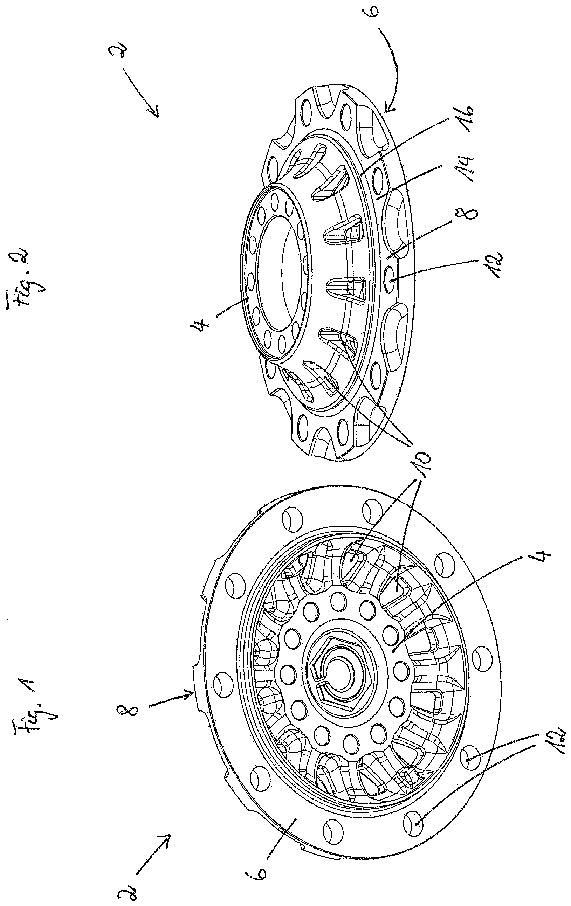

In Fig. 1 ist eine Ansicht auf die Außenseite eines Radnabenflansches 2 gezeigt. Der Radnabenflansch 2 kann mit dem mittig ausgebildeten Nabenflansch 4 auf die Radnabe einer Fahrzeugachse aufgesetzt werden. Der außenseitige Flanschrand 6 dient als Anlagefläche für die Radschüssel eines zeichnerisch nicht näher dargestellten Fahrzeugrades. Der Radnabenflansch 2 verfügt auch über einen innenseitigen Flanschrand 8, an den die Trompetenscheibe einer Bremsscheibenanordnung angelegt werden kann.

Im Radnabenflansch 2 befinden sich eine Anzahl von Kühlluftöffnungen 10, die über den Umfang des Radnabenflansches 2 verteilt angeordnet sind. Durch die Kühlluftöffnung 10 kann Kühlluft zur Bremsscheibe strömen, die auf der Innenseite des Radnabenflansches angeordnet ist.

Im Bereich des außenseitigen Flanschrandes 6 sind noch Bolzenlöcher 12 erkennbar, durch die Stehbolzen 32 hindurchgeschoben werden können, um damit zumindest die Radschüssel eines Fahrzeugrades verschrauben zu können. Nach einer Ausgestaltung der vorliegenden Erfindung können die durch die Bolzenlöcher 12 hindurchgeschobenen Stehbolzen 32 auch dazu genutzt werden, die Bremsscheibenanordnung 18 mit dem Radnabenflansch 2 zu verbinden. In Fig. 2 ist eine Ansicht des Radnabenflansches 2 mit Blick auf dessen Innenseite gezeigt. In Fig. 2 ist die Anlagefläche 14 erkennbar, auf die die Trompetenscheibe einer Bremsscheibenanordnung aufgesetzt wird. Um die Trompetenscheibe zu zentrieren, ist am Radnabenflansch 2 ein Zentriervorsprung 16 ausgebildet, der ringförmig entlang der Anlagefläche 14 ausgebildet ist.

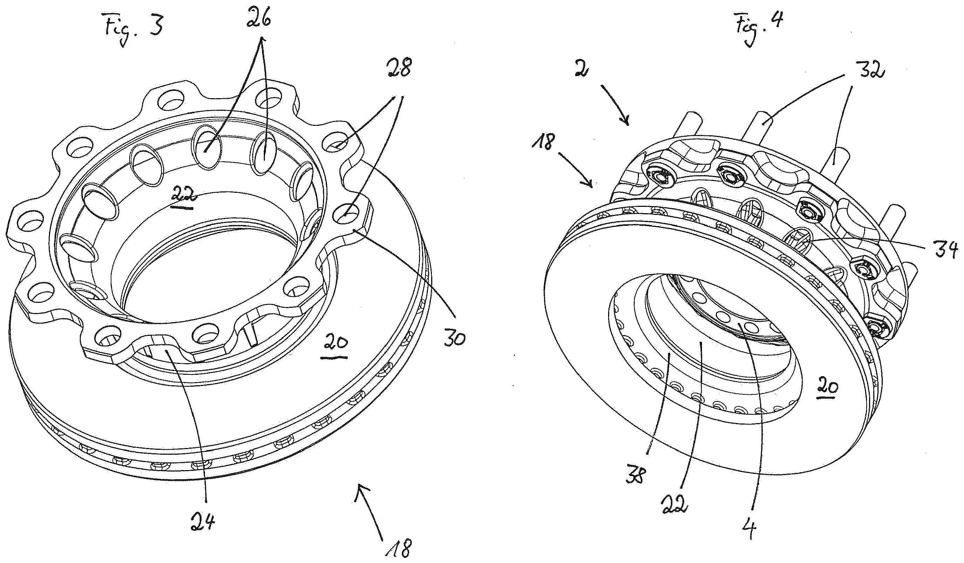

Die Fig. 3 zeigt eine Ansicht von schräg außen auf eine Trompetenscheibe 22 einer Bremsscheibenanordnung 18, die auch einen Reibring 20 aufweist. In der in Fig. 3 gezeigten Ansicht ist gut erkennbar, dass sich der als Trompetenscheibe 22 ausgebildete Bremsscheibentopf nach außen hin in Richtung des Radnabenflansches 2 erweitert. Die Wandung 24 der Trompetenscheibe 22 weist eine Anzahl von Kühlluftöffnungen 26 auf, durch die Kühlluft zur Bremsscheibe in Gestalt des Reibrings 20 strömen kann. Die Wandung 24 der Trompetenscheibe 22 ist in einem Bogen von etwa 90° geschwungen, so dass die Trompetenscheiben 22 mit ihren radnabenflanschseitigen Enden auf den nach innen weisenden, am Radnabenflansch 2 innenseitig ausgebildeten Flanschrand 6 aufgesetzt und mit diesem verschraubt werden können. Dabei ist im Ausführungsbeispiel der äußere Rand der Trompetenscheibe 22 so weit nach außen geführt, dass er bis in den Bereich des außenrandseitigen Flanschrandes 6 des Radnabenflansches 2 reicht. Die Bolzenlöcher 28 sind im Ausführungsbeispiel an Positionen ausgeführt, die den Positionen der Bolzenlöcher 12 im Radnabenflansch 2 entsprechen. Dadurch können durch die Bolzenlöcher 12, 28 Stehbolzen 32 hindurchgeschoben und mit der Radschüssel eines Fahrzeugrades verschraubt werden.

In Fig. 3 ist weiter erkennbar, dass die Trompetenscheibe 22 im Anbindungsbereich an den Radnabenflansch 2 eine zahnkranzartige Form aufweist. Die Bolzenlöcher 28 zur Verbindung mit dem Radnabenflansch 2 sind in den vorstehenden Zähnen 30 des Zahnkranzes ausgebildet.

In Fig. 4 ist eine Ansicht von schräg innen auf den Zusammenbau eines Radnabenflansches 2 mit einer Trompetenscheibe 22 mit Reibring 20 gezeigt. In dem Zusammenbau sind nun die in die Bolzenlöcher 12, 28 eingesetzten Stehbolzen 32 erkennbar. In der Ansicht des Zusammenbaus sind auch die gerundeten Übergänge 34 im Bereich der Kühlluftöffnungen 10, 26 erkennbar.

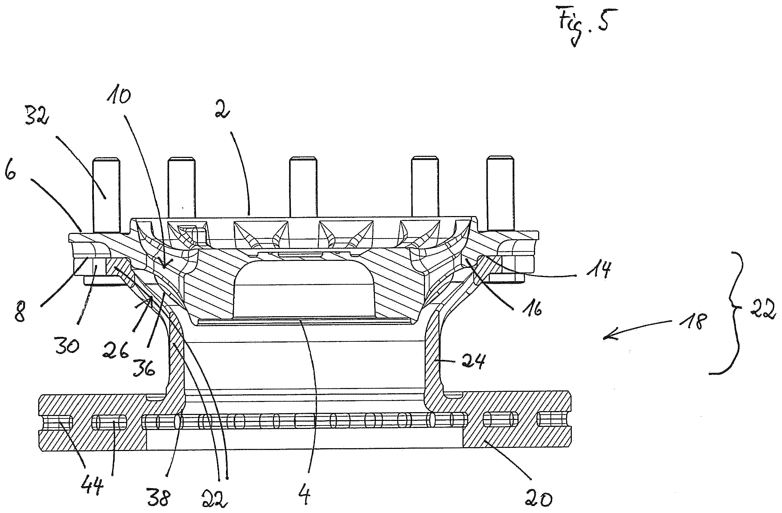

Fig. 5 zeigt eine Schnittansicht durch einen Zusammenbau eines Radnabenflansches 2 mit einer Trompetenscheiben 22 mit Reibring 20. In der Schnittansicht ist erkennbar, dass die Kühlluftöffnungen 10, 26 miteinander korrespondieren und einen gemeinsamen Luftführungskanal ausbilden, durch den Kühlluft von außen her an den Reibring 20 der Bremsscheibenanordnung 18 herangeführt werden kann. Zwischen der Kühlluftöffnung 10 im Radnabenflansch 2 und der Kühlluftöffnung 26 in der Trompetenscheibe 22 liegt ein Übergangsbereich 36, durch den die Kühlluft hindurchströmen muss. Der Übergangsbereich 36 ist in dem gezeigten Ausführungsbeispiel frei von Hindernissen, so dass der Kühlluftstrom durch die Kühlluftöffnungen 10, 26 im Übergangsbereich 36 nicht behindert wird.

Zusätzlich ist erkennbar, dass die Wandung 24 der Trompetenscheibe 22 in dem vom Radnabenflansch 2 entfernten Bereich einen Ringraum bildet, der annähernd von der Radnabe des Fahrzeugs ausgefüllt werden kann.

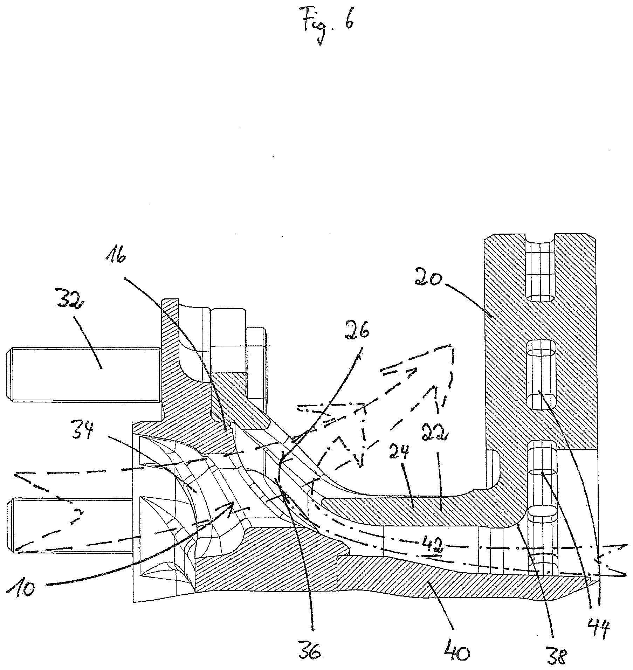

Eine vergrößerte Ansicht der Kühlluftöffnungen 10, 26 sowie der Wandung 24 im Bereich einer Radnabe 40 ist in Fig. 6 gezeigt. Die Wandung 24 und die Außenoberfläche der Radnabe 40 begrenzen zwischen sich einen Luftführungskanal 42, durch den ebenfalls Kühlluft für die Bremsscheibenanordnung 18 geleitet werden kann. In Fig. 6 ist die Luftströmung im Stand des Fahrzeugs gezeigt. Der im Stand von außen nach innen durch die Kühlluftöffnungen 10, 26 hindurch strömende Kühlluftstrom ist als Pfeil in einer gestrichelten Linie dargestellt. Anhand des Pfeils ist gut erkennbar, dass es möglich ist, durch die Kühlluftöffnungen 10, 26 größere Mengen an Kühlluft durchströmen zu lassen. Ein zusätzlicher Luftstrom, der in Fig. 6 mit einer strichpunktierten Linie angedeutet ist, strömt aus dem Luftführungskanal 42 in den Übergangsbereich 36 zwischen den Kühlluftöffnungen 10, 26. Von dort aus kann er ebenfalls in den Zwischenraum zwischen der Innenseite des Radnabenflansches 2 und dem Reibring 20 strömen. Durch den zusätzlichen Luftführungskanal 42 ist es möglich, die Trompetenscheibe 22 nicht nur über den von außen nach innen strömenden Luftstrom durch die Kühlluftöffnungen 10, 26 sondern zusätzlich auch durch den Luftstrom zu kühlen, der durch den Luftführungskanal 42 hindurchströmt.

Mit dem Luftstrom, der durch den Luftführungskanal 42 hindurchströmt, kann auch Kühlluft mitgenommen werden, die aus den Kühlkanälen 44 austritt und um die Innenkante 38 des Reibrings 20 herumströmt. Abweichend vom Ausführungsbeispiel kann der Luftführungskanal 42 auch an anderer Stelle der Trompetenscheibe 22 münden, so beispielsweise insbesondere auch in einem Abstand zu der Kühlluftöffnung 26.

In der vergrößerten Schnittansicht in Fig. 6 ist noch einmal deutlicher erkennbar, dass der Zentriervorsprung 16, der am Radnabenflansch 2 ausgebildet ist, die Trompetenscheibe 23 in ihrer Einbaulage gegen unerwünschte Bewegungen quer zur axialen Richtung des Stehbolzens 32 abstützt.

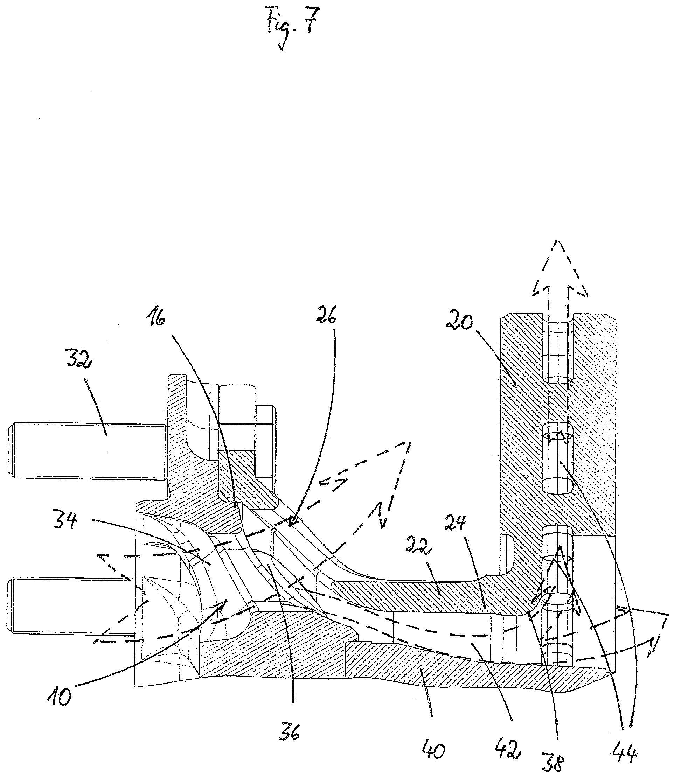

In Fig. 7 ist die Luftströmung in gestrichelten Linien während der Fahrt gezeigt. Durch den anstehenden Fahrtwind und die gezielte Luftführung im Bereich der Kühlluftöffnungen 10, 26 und des Luftführungskanals 42 ist der Kühlluftstrom entlang der Nabe im Luftführungskanal 42 gegenüber der Strömungsrichtung im Stand entgegengesetzt. Beide Luftströmungen strömen annähernd in dieselbe Strömungsrichtung.

Zeichnerisch nicht näher dargestellt in den Figuren sind Leitkanten oder Leitbleche, durch die Kühlluft in die Kühlluftöffnungen 10, 26 geleitet wird. Entsprechende Elemente können allerdings vorgesehen sein, um das Durchsatzvolumen von Kühlluft durch die Kühlluftöffnungen 10, 26 insbesondere bei der Fahrt zu steigern.

Auch ist in den Fig. 6 und 7 noch einmal erkennbar, dass die Kühlluftöffnungen 10, 26 in den entsprechenden Seitenwänden gerundet gestaltete Übergänge 34 aufweisen, durch die die Luftströmungen im Ein- und Ausströmungsbereich besser geführt und unterstützt werden und Verwirbelungen des Luftstroms abgeschwächt oder ganz vermieden sind.

Die vorstehende gegenständliche Beschreibung dient nur der Erläuterung der Erfindung. Die Erfindung ist nicht auf das beschriebene Ausführungsbeispiel beschränkt. Dem Fachmann bereitet es keine Schwierigkeiten, die Erfindung durch Abwandlung des Ausführungsbeispiels auf eine ihm als geeignet erscheinende Weise an einen konkreten Anwendungsfall anzupassen.

## Patentansprüche

1. Radnabenflansch (2) mit einer dazu benachbart angeordneten Bremsscheibenanordnung, wobei der Radnabenflansch zur Verbindung einer Radschüssel eines Fahrzeugrades mit einer Radnabe (40) dient, an dem Radnabenflansch (2) sind im mittleren Bereich ein Nabenflansch (4) zur Verbindung des Radnabenflansches (2) mit der Radnabe (40) und außenrandseitig ein nach außen weisend angeordneter Flanschrand (6) zur Verbindung des Radnabenflansches (2) mit der Radschüssel des Fahrzeugrades ausgebildet, der Radnabenflansch (2) überragt mit seinem Außenumfang den Innenrand eines Reibrings (20) und weist Kühlluftöffnungen (10) auf, und beabstandet zum Radnabenflansch (2) ist ein Reibring (20) einer Bremsscheibenanordnung (18) angeordnet, der über einen sich zumindest bereichsweise in Richtung des Radnabenflansches (2) erstreckenden Bremsscheibentopf in seiner Einbaulage gehalten ist, wobei der Bremsscheibentopf als eine Trompetenscheibe (22) ausgebildet ist, die sich vom Reibring (20) aus in Richtung des Radnabenflansches (2) erweitert und der Bremsscheibentopf an seinen radnabenflanschseitigen Enden der Trompetenscheibe (22) auf einen nach innen weisenden, am Radnabenflansch (2) innenseitig ausgebildeten Flanschrand (6) aufgesetzt und mit diesem verbunden ist, **dadurch gekennzeichnet, dass** in der Wandung (24) der Trompetenscheibe (22) Kühlluftöffnungen (26) ausgebildet sind, durch die ein Kühlluftstrom aus den Kühlluftöffnungen im Radnabenflansch (2) auch in den Außenumfangsbereich der Trompetenscheibe (22) strömen kann.

2. Radnabenflansch (2) mit einer dazu benachbart angeordneten Bremsscheibenanordnung nach Anspruch 1, **dadurch gekennzeichnet, dass** die im Radnabenflansch (2) und in der Wandung (24) der Trompetenscheibe (22) ausgebildeten Kühlluftöffnungen (10, 26) so benachbart zueinander angeordnet sind, dass die Kühlluft den Übergangsbereich (36) zwischen den Kühlluftöffnungen (10, 26) möglichst umlenkungsfrei durchströmt.

3. Radnabenflansch (2) mit einer dazu benachbart angeordneten Bremsscheibenanordnung nach Anspruch 1 oder 2, **dadurch gekennzeichnet, dass** die Wandung (24) der Trompetenscheibe (22) beabstandet zur Radnabe (40) ausgebildet ist und auf diese Weise auf einer Seite einen von der Innenkante (38) des Reibrings (20) der Bremsscheibenanordnung (18) entlang der Radnabe (40) verlaufenden Luftführungskanal (42) begrenzt, der im Übergangsbereich (36) der im Radflansch und in der Wandung (24) der Trompetenscheibe (22) ausgebildeten Kühlluftöffnungen (10, 26) zueinander mündet.

4. Radnabenflansch (2) mit einer dazu benachbart angeordneten Bremsscheibenanordnung nach Anspruch 3, **dadurch gekennzeichnet, dass** der Reibring (20) der Bremsscheibenanordnung (18) von Kühlkanälen (44) zur Innenbelüftung durchsetzt ist, die an einem Ende an dem entlang der Radnabe (40) verlaufenden Luftführungskanal (42) münden.

5. Radnabenflansch (2) mit einer dazu benachbart angeordneten Bremsscheibenanordnung nach einem der vorhergehenden Ansprüche, **dadurch gekennzeichnet, dass** die Trompetenscheibe (22) auf der Innenseite des Radnabenflansches (2) bis in den Bereich des außenrandseitigen Flanschrands (6) zur Verbindung des Radnabenflansches (2) mit der Radschüssel des Fahrzeugrades reicht, und Stehbolzen (32), mit denen die Radschüssel des Fahrzeugrades mit dem Radnabenflansch (2) verschraubt werden kann, im Verbindungsbereich der Trompetenscheibe (22) mit dem Radnabenflansch (2) durch in diesen Bauteilen ausgebildete miteinander fluchtende Bolzenlöcher (12, 28) hindurch geführt sind.

6. Radnabenflansch (2) mit einer dazu benachbart angeordneten Bremsscheibenanordnung nach Anspruch 5, **dadurch gekennzeichnet, dass** die Trompetenscheibe (22) im Anbindungsbereich an den Radnabenflansch (2) eine zahnkranzartige Form aufweist und die Bolzenlöcher (28) zur Verbindung mit dem Radnabenflansch (2) in den vorstehenden Zähnen (30) des Zahnkranzes ausgebildet sind.

7. Radnabenflansch (2) mit einer dazu benachbart angeordneten Bremsscheibenanordnung nach einem der vorhergehenden Ansprüche, **dadurch gekennzeichnet, dass** auf der Innenseite des Radnabenflansches (2) ein über eine trompetenseitige Anlagefläche (14) hervorstehender Zentriervorsprung (16) ausgebildet ist, an den die Trompetenscheibe (22) in der Montageposition angelehnt ist.

8. Radnabenflansch (2) mit einer dazu benachbart angeordneten Bremsscheibenanordnung nach einem der vorhergehenden Ansprüche, **dadurch gekennzeichnet, dass** am Radnabenflansch (2), der Trompetenscheibe (22) oder der übrigen Bremsscheibenanordnung (18) Leitkanten oder Leitbleche zur Kühlluftführung angeordnet sind.

9. Radnabenflansch (2) mit einer dazu benachbart angeordneten Bremsscheibenanordnung nach einem der vorhergehenden Ansprüche, **dadurch gekennzeichnet, dass** die Seitenwände der im Radnabenflansch (2) und in der Wandung (24) der Trompetenscheibe (22) ausgebildeten Kühlluftöffnungen (10, 26) im Ein- und/oder im Ausströmungsbereich gerundet gestaltete Übergänge (34) aufweisen.

## Claims

1. Wheel hub flange (2) having a brake disc assembly arranged adjacent thereto, the wheel hub flange being used to connect a wheel brace of a vehicle wheel to a wheel hub (40), on the wheel hub flange (2) in the central region a hub flange (4) being designed to connect the wheel hub flange (2) to the wheel hub (40) and on the outer edge a flange edge (6) arranged facing outwards being designed to connect the wheel hub flange (2) to the wheel brace of the vehicle wheel, the outer circumference of the wheel hub flange (2) projecting beyond the inner edge of a friction ring (20) and the wheel hub flange having cooling air openings (10), and a friction ring (20) of a brake disc assembly (18) being arranged spaced apart from the wheel hub flange (2), which ring is held in the installed position thereof by means of a brake disc pot which extends at least in regions in the direction of the wheel hub flange (2), the brake disc pot being formed as a trumpet disc (22) which widens from the friction ring (20) towards the wheel hub flange (2), and the brake disc pot, on the wheel hub flange-side ends of the trumpet disc (22), being mounted on an inwardly facing flange edge (6) formed on the inner face of the wheel hub flange (2) and being connected thereto, **characterised in that** cooling air openings (26) are formed in the wall (24) of the trumpet disc (22), through which openings a stream of cool air from the cooling air openings in the wheel hub flange (2) can also flow into the outer circumference region of the trumpet disc (22).

2. Wheel hub flange (2) having a brake disc assembly arranged adjacent thereto according to claim 1, **characterised in that** the cooling air openings (10, 26) formed in the wheel hub flange (2) and in the wall (24) of the trumpet disc (22) are arranged adjacent to one another such that the cooling air flows through the transition region (36) between the cooling air openings (10, 26) in a manner that is as free of deflection as possible.

3. Wheel hub flange (2) having a brake disc assembly arranged adjacent thereto according to either claim 1 or claim 2, **characterised in that** the wall (24) of the trumpet disc (22) is spaced apart from the wheel hub (40) and in this way on one face defines an air duct (42) which extends along the wheel hub (40) from the inner edge (38) of the friction ring (20) of the brake disc assembly (18), which duct opens in the transition region (36) between the cooling air openings (10, 26) formed in the wheel flange and in the wall (24) of the trumpet disc (22).

4. Wheel hub flange (2) having a brake disc assembly arranged adjacent thereto according to claim 3, **characterised in that** the friction ring (20) of the brake disc assembly (18) is passed through by cooling ducts (44) for internal ventilation, which ducts open at one end of the air duct (42) that extends along the wheel hub (40).

5. Wheel hub flange (2) having a brake disc assembly arranged adjacent thereto according to any of the preceding claims, **characterised in that** the trumpet disc (22) extends on the inner face of the wheel hub flange (2) up to into the region of the flange edge (6) on the outer edge in order to connect the wheel hub flange (2) to the wheel brace of the vehicle wheel, and, in the region in which the trumpet disc (22) connects to the wheel hub flange (2), stay bolts (32) by means of which the wheel brace of the vehicle wheel can be screwed to the wheel hub flange (2) are guided through bolt holes (12, 28) that are formed in these components and are in alignment with one another.

6. Wheel hub flange (2) having a brake disc assembly arranged adjacent thereto according to claim 5, **characterised in that** the trumpet disc (22) has a sprocket-like shape in the region in which it attaches to the hub flange (2), and the bolt holes (28) are formed in the projecting teeth (30) of the sprocket in order to connect to the wheel hub flange (2).

7. Wheel hub flange (2) having a brake disc assembly arranged adjacent thereto according to any of the preceding claims, **characterised in that** a centring projection (16) which protrudes beyond a trumpet-side contact surface (14) is formed on the inner face of the wheel hub flange (2), on which projection the trumpet disc (22) leans when in the mounting position.

8. Wheel hub flange (2) having a brake disc assembly arranged adjacent thereto according to any of the preceding claims, **characterised in that** guiding edges or baffles are arranged on the wheel hub flange (2), the trumpet disc (22) or the rest of the brake disc assembly (18) in order to guide the cooling air.

9. Wheel hub flange (2) having a brake disc assembly arranged adjacent thereto according to any of the preceding claims, **characterised in that** the side walls of the cooling air openings (10, 26) formed in the wheel hub flange (2) and in the wall (24) of the trumpet disc (22) have rounded transitions (34) in the inflow and/or outflow region.

## Revendications

1. Flasque de moyeu de roue (2) avec un ensemble de disque de frein adjacent à celui-ci, dans lequel le flasque de moyeu de roue sert à raccorder un disque de roue d'une roue de véhicule à un moyeu de roue (40), dans lequel, sur le flasque de moyeu de roue (2), dans la partie centrale, un flasque de moyeu (4) pour raccorder le flasque de moyeu de roue (2) au moyeu de roue (40) est réalisé, et en périphérie extérieure, un bord de flasque (6) disposé en étant tourné vers l'extérieur pour raccorder le flasque de moyeu de roue (2) au disque de roue de la roue de véhicule est réalisé, dans lequel le flasque de moyeu de roue (2) dépasse de sa circonférence extérieure le bord intérieur d'un anneau de friction (20) et présente des entrées d'air de refroidissement (10), et à distance du flasque de moyeu de roue (2), un anneau de friction (20) d'un ensemble de disque de frein (18) est disposé, ledit anneau étant maintenu dans sa position d'installation par un pot de disque de frein s'étendant au moins localement en direction du flasque de moyeu de roue (2), dans lequel le pot de disque de frein est réalisé sous forme de disque en coupelle (22) s'évasant depuis l'anneau de friction (20) vers le flasque de moyeu de roue (2), et le pot de disque de frein est posé au niveau de ses extrémités côté flasque de moyeu de roue du disque en coupelle (22) sur un bord de flasque (6) tourné vers l'intérieur et réalisé côté intérieur sur le flasque de moyeu de roue (2) et relié à celui-ci, **caractérisé en ce que** dans la paroi (24) du disque en coupelle (22), des entrées d'air de refroidissement (26) sont réalisées à travers lesquelles un courant d'air de refroidissement peut s'écouler des entrées d'air de refroidissement dans le flasque de moyeu de roue (2) même dans la zone de circonférence extérieure du disque en coupelle (22).

2. Flasque de moyeu de roue (2) avec un ensemble de disque de frein adjacent à celui-ci selon la revendication 1, **caractérisé en ce que** les entrées d'air de refroidissement (10, 26) réalisées dans le flasque de moyeu de roue (2) et dans la paroi (24) du disque en coupelle (22) sont adjacentes les unes aux autres de telle sorte que l'air de refroidissement passe à travers la zone de transition (36) entre les entrées d'air de refroidissement (10, 26), dans la mesure du possible sans être dévié.

3. Flasque de moyeu de roue (2) avec un ensemble de disque de frein adjacent à celui-ci selon la revendication 1 ou 2, **caractérisé en ce que** la paroi (24) du disque en coupelle (22) est réalisée à distance du moyeu de roue (40) et délimite ainsi sur un côté un conduit d'air (42) s'étendant depuis le bord intérieur (38) de l'anneau de friction (20) de l'ensemble de disque de frein (18) le long du moyeu de roue (40), conduit qui débouche respectivement dans la zone de transition (36) des entrées d'air de refroidissement (10, 26) réalisées dans le flasque de moyeu de roue et dans la paroi (24) du disque en coupelle.

4. Flasque de moyeu de roue (2) avec un ensemble de disque de frein adjacent à celui-ci selon la revendication 3, **caractérisé en ce que** l'anneau de friction (20) de l'ensemble de disque de frein (18) est traversé par des canaux de refroidissement (44) pour la ventilation intérieure qui débouchent à une extrémité sur le conduit d'air (42) s'étendant le long du moyeu de roue (40).

5. Flasque de moyeu de roue (2) avec un ensemble de disque de frein adjacent à celui-ci selon l'une quelconque des revendications précédentes, **caractérisé en ce que** le disque en coupelle (22) s'étend sur le côté intérieur du flasque de moyeu de roue (2) jusque dans la zone du bord de flasque (6) en périphérie extérieure pour raccorder le flasque de moyeu de roue (2) au disque de roue de la roue de véhicule, et
des boulons filetés (32) permettant de visser le disque de roue de la roue de véhicule sur le flasque de moyeu de roue (2), dans la zone de raccordement du disque en coupelle (22) au flasque de moyeu de roue (2), sont amenés à passer à travers des trous de boulon (12, 28) réalisés dans ces composants et alignés les uns sur les autres.

6. Flasque de moyeu de roue (2) avec un ensemble de disque de frein adjacent à celui-ci selon la revendication 5, **caractérisé en ce que** le disque en coupelle (22) présente dans la zone d'attache au flasque de moyeu de roue (2) une forme de type couronne dentée et les trous de boulon (28) pour le raccordement au flasque de moyeu de roue (2) sont réalisés dans les dents faisant saillie (30) de la couronne dentée.

7. Flasque de moyeu de roue (2) avec un ensemble de disque de frein adjacent à celui-ci selon l'une quelconque des revendications précédentes, **caractérisé en ce que** sur le côté intérieur du flasque de moyeu de roue (2) est réalisé une saillie de centrage (16) dépassant d'une surface d'appui (14) côté coupelle, le disque en coupelle (22) prenant appui sur celle-ci dans la position de montage.

8. Flasque de moyeu de roue (2) avec un ensemble de disque de frein adjacent à celui-ci selon l'une quelconque des revendications précédentes, **caractérisé en ce que** des bords d'attaque ou des déflecteurs pour guider l'air de refroidissement sont disposés sur le flasque de moyeu de roue (2), le disque en coupelle (22) ou le reste de l'ensemble de disque de frein (18).

9. Flasque de moyeu de roue (2) avec un ensemble de disque de frein adjacent à celui-ci selon l'une quelconque des revendications précédentes, **caractérisé en ce que** les parois latérales des entrées d'air de refroidissement (10, 26) réalisées dans la paroi (24) du disque en coupelle (22) présentent des transitions (34) de forme arrondie dans la zone d'entrée et/ou de sortie d'écoulement.
